# FASCICULE DE BREVET EUROPEEN

(11) **EP 1 731 728 B1**
(45) Date de publication et mention de la délivrance du brevet: **07.07.2010**
(21) Numéro de dépôt: 06300515.1
(22) Date de dépôt: 24.05.2006
(51) Int. Cl.: F01N 3/20

(54) **Dispositif de dépollution de gaz d'échappement**
Abgasnachbehandlungsvorrichtung
Exhaust gas after treatment apparatus

(30) Priorité: 07.06.2005 FR 0551516
(43) Date de publication de la demande: 13.12.2006
(73) Titulaire: RENAULT S.A.S., 92100 Boulogne Billancourt (FR)
(72) Inventeur: Bodin, Marc, 92500, Rueil Malmaison (FR)

(56) Documents cités:
- EP-A- 1 138 891
- WO-A-03/084647
- WO-A-2005/005799
- WO-A-2005/028827
- FR-A- 2 725 755
- FR-A- 2 809 451
- US-A- 5 522 218
- PATENT ABSTRACTS OF JAPAN vol. 1997, no. 08, 29 août 1997 (1997-08-29) & JP 09 096212 A (MITSUBISHI MOTORS CORP), 8 avril 1997 (1997-04-08)

## Description

La présente invention concerne les dispositifs de dépollution des gaz d'échappement, et plus particulièrement les moteurs qui comportent des dispositifs de dépollution des gaz d'échappement qui comportent un système d'injection d'un agent réducteur dans la ligne d'échappement.

Pour éliminer les polluants des gaz d'échappement tels que les oxydes d'azote (NOx) ou encore les particules pour les moteurs diesels, on peut avoir recours à des injections d'agents réducteurs directement dans la ligne d'échappement. Ces agents peuvent servir à générer de la chaleur pour réchauffer les gaz d'échappement, ils peuvent aussi réagir chimiquement avec des polluants pour les transformer en des produits moins polluant, ils peuvent encore servir à réguler une température de gaz de sorte que ceux-ci ne dépassent pas une certaine température limite.

Un problème lié à cette solution est que le système d'injection utilise un injecteur spécifique disposé sur la ligne d'échappement, et que cet injecteur doit supporter les contraintes thermiques apportées par la chaleur des gaz d'échappement.

Le document JP09096212 propose un dispositif de dépollution comportant des moyens de refroidissement d'un injecteur d'un agent réducteur, les moyens de refroidissement faisant circuler du liquide de refroidissement au niveau de l'injecteur.

Un des objectifs de l'invention est de diminuer les contraintes thermiques que doit supporter l'injecteur, sans avoir à le modifier, ou sans avoir recours à des spécifications techniques qui le rendraient trop onéreux.

L'invention fournit dans ce but un moteur à combustion interne comportant un dispositif de dépollution des gaz d'échappement et un turbocompresseur, le dispositif comportant un système d'injection d'un agent réducteur à l'aide d'un injecteur disposé sur une ligne d'échappement munis de composants, des moyens de refroidissement de l'injecteur comportant un circuit de circulation d'un fluide muni d'une platine recevant l'injecteur et définissant des orifices d'entrée et de sortie du fluide. Selon l'invention, le turbocompresseur comporte un circuit de refroidissement muni d'un orifice d'entrée et de sortie de fluide de refroidissement, et le circuit de circulation de fluide du dispositif de dépollution est relié au circuit de refroidissement du turbocompresseur au moyen d'un tuyau

La présente invention et ses avantages seront mieux compris à la lecture de la description détaillée d'un mode de réalisation pris à titre d'exemple et nullement limitatif, et illustré par les dessins annexés sur lesquels :
- la figure 1 représente un moteur à combustion interne avec sa ligne d'échappement et son dispositif de dépollution ;
- la figure 2 est une vue d'une partie de la ligne d'échappement ;
- la figure 3 représente une vue en coupe et de dessus de la platine support recevant l'injecteur

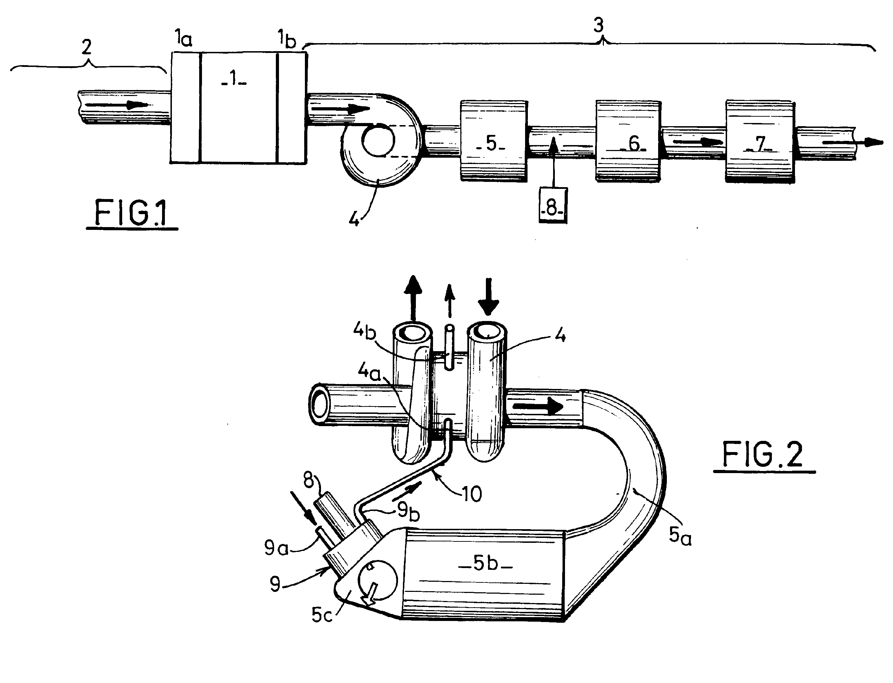

Un moteur à combustion interne est représenté à la figure 1 sous la référence 1. Le moteur reçoit des gaz frais par une ligne d'admission 2, et évacue les gaz brûlés par une ligne d'échappement 3. Les gaz brûlés qui sortent du moteur 1 sont recueillis par un collecteur d'échappement 1a, traversent ta turbine d'un turbocompresseur 4, puis sont traités par un dispositif de dépollution, en passant successivement par des organes de dépollution tels qu'un catalyseur d'oxydation primaire 5, puis par un catalyseur d'oxydation secondaire 6 et enfin par un filtre à particules 7.

Le dispositif de dépollution comporte un système d'injection d'un agent réducteur à l'aide d'un injecteur 8 disposé sur la ligne d'échappement 3. Par agent réducteur, il convient d'entendre un agent pouvant servir à générer de la chaleur pour réchauffer les gaz d'échappement, pouvant aussi réagir chimiquement avec des polluants pour les transformer en des produits moins polluant, ou pouvant encore servir à réguler une température de gaz de sorte que ceux-ci ne dépassent pas une certaine température limite.

Dans cette configuration à deux catalyseurs primaire 5 et secondaire 6, l'injecteur 8 est disposé entre les deux. Dans le cas d'une configuration à un seul catalyseur, l'injecteur est placé en amont du média de ce catalyseur.

Le dispositif de dépollution comporte des moyens de refroidissement de l'injecteur 8. La ligne d'échappement est très contrainte thermiquement, et pour ne pas dégrader l'injecteur 8 à cause des hautes températures des gaz d'échappement, on peut utiliser un circuit de circulation d'un fluide de refroidissement. Selon l'invention, en référence aussi à la figure 2, ce circuit est relié au circuit de refroidissement du turbocompresseur 4.

On peut envisager de monter en série le circuit de refroidissement de l'injecteur 8 avec le circuit de refroidissement du turbocompresseur 4 : le turbocompresseur 4 comporte une entrée 4a et une sortie 4b de fluide de refroidissement. Les moyens de refroidissement comportent un support ou platine 9 recevant l'injecteur 8, cette platine 9 comportant également une entrée 9a et une sortie 9b de fluide de refroidissement. On peut faire arriver le fluide de refroidissement par l'entrée 9a de la platine 9, en réalisant un piquage sur le circuit de refroidissement du moteur par exemple, puis de le guider vers le circuit de refroidissement du turbocompresseur 4, en reliant la sortie 9b de la platine à l'entrée 4a à l'aide du tuyau 10. Le fluide est ensuite renvoyé de la sortie 4b au circuit de refroidissement du moteur.

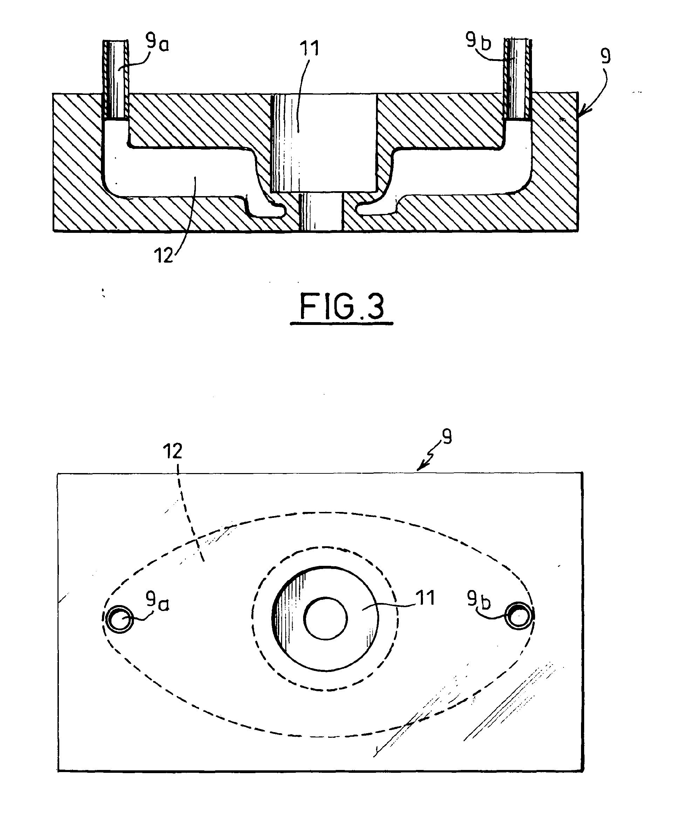

En référence aussi à la figure 3, la platine 9 définit un puits 11 recevant l'injecteur 8. Le puits 11 définit un alésage et un perçage, l'injecteur 8 venant en buté contre le fond de l'alésage, et le nez (ou buse) de l'injecteur 8 traverse axialement le perçage du puits 11. Cette platine 9 sert de support pour l'injecteur 8, et sert aussi pour son refroidissement. Elle définit à cet effet une chambre 12 destinée à recevoir le fluide de refroidissement grâce à des orifices d'entrée 8a et de sortie 8b du fluide. Avantageusement, cette chambre 12 entoure au moins une partie du puits 11 recevant l'injecteur 8, de manière à refroidir uniformément l'injecteur 8. La chambre 12 peut aussi être travaillée de manière à ce qu'elle définisse une portion passant sous le fond de l'alésage du puits 11 et entourant le perçage du puits 11, de manière à refroidir au mieux la platine 9, l'injecteur 8 et sa buse.

La platine 9 peut comporter des moyens de fixations (non représentés) de l'injecteur 8, comme par exemple un ensemble vis et bride : la vis se loge dans un taraudage réalisé dans la platine 9 et vient faire appuyer la bride contre une surface de l'injecteur 8.

La platine 9 peut être disposée sur un quelconque composant de la ligne d'échappement 2 selon l'endroit où l'on souhaite placer l'injecteur 8. Elle peut être rapportée et fixée par vis, ou elle peut être réalisée directement en une seule pièce avec une partie d'un composant de la ligne d'échappement 2, par exemple par moulage.

L'invention concerne donc également un composant de la ligne d'échappement 2 du moteur à combustion interne 1 qui comporte un support 9 (ou platine) muni de moyens de refroidissement pour l'injecteur 8 qui diffuse un agent réducteur à l'intérieur du composant.

Dans cet exemple de réalisation, la platine 9 est disposée sur le catalyseur d'oxydation primaire 5, en aval du média oxydant. Dans le cas où il n'a qu'un seul catalyseur d'oxydation, on peut envisager de disposer la platine 9 en amont du média de ce catalyseur. Dans le cas d'une architecture avec un catalyseur d'oxydation et un filtre à particules catalytique, la platine peut être disposée sur le catalyseur en aval du média oxydant, comme pour un catalyseur primaire d'oxydation 5.

Le catalyseur d'oxydation primaire 5 se fixe à la sortie du turbocompresseur 4. Il est composé de trois parties ; un cône d'entrée 5a, une partie centrale 5b renfermant le média sur lequel se trouve le matériau catalytique, et un cône de sortie 5c. Le cône d'entrée est courbé à 180°. La platine 9 est disposée sur le cône de sortie 5c. Un avantage est que la platine 9 se trouve à proximité du turbocompresseur 4, ce qui simplifie les connexions des orifices de circulation de fluide du turbocompresseur 4 et de la platine 9 et diminue la longueur du tuyau 10.

L'invention concerne également un procédé de dépollution des gaz d'échappement d'un moteur à combustion interne qui comporte une étape d'injection d'un agent réducteur à l'aide de injecteur 8 du dispositif de dépollution. Selon l'invention, le procédé comporte une étape de refroidissement de l'injecteur 8.

Cette étape peut être réalisée en continu, c'est-à-dire que l'injecteur 8 est refroidi en permanence, par circulation d'un fluide de refroidissement à l'intérieur d'un support 9 recevant l'injecteur 8.

Cette étape peut aussi se dérouler lorsque la température du support 9 dépasse un seuil prédéterminé. On peut pour cela utiliser un capteur qui mesure la température du support 9 et qui envoi un signal à un calculateur. Le calculateur compare ce signal représentatif de la température à un seuil prédéterminé, et ouvre une vanne pour permettre la circulation du fluide de refroidissement à l'intérieur du support 9 lorsque la température dépasse le seuil.

## Revendications

1. Moteur à combustion interne (1) comportant un dispositif de dépollution des gaz d'échappement et un turbocompresseur, le dispositif comportant un système d'injection d'un agent réducteur à l'aide d'un injecteur (8) disposé sur une ligne d'échappement (3) munis de composants (5,6,7), des moyens de refroidissement de l'injecteur (8) comportant un circuit de circulation d'un fluide muni d'une platine recevant l'injecteur (9) et définissant des orifices d'entrée (8a) et de sortie (8b) du fluide, **caractérisé en ce que** le turbocompresseur comporte un circuit de refroidissement muni d'un orifice d'entrée (4a) et de sortie (4b) de fluide de refroidissement, et **en ce que** le circuit de circulation de fluide du dispositif de dépollution est relié au circuit de refroidissement du turbocompresseur (4) au moyen d'un tuyau 10.

2. Moteur (1) de dépollution selon la revendication 1, **caractérisé en ce que** le circuit de circulation de fluide est monté en série avec le circuit de refroidissement du turbocompresseur (4).

3. Moteur (1) selon la revendication 1 ou 2, **caractérisé en ce que** la platine (9) est disposée sur un composant (5) de la ligne d'échappement (2), la platine (9) définissant un puits (11) recevant l'injecteur (8), une chambre (12) destiné à recevoir le fluide et les orifice d'entrée (9a) et un orifice de sortie (9b) du fluide.

4. Moteur (1) selon la revendication 3, **caractérisé en ce que** la chambre (12) destinée à recevoir le fluide entoure au moins une partie du puits (11) recevant l'injecteur (8).

5. Moteur (1) selon la revendication 3 ou 4, **caractérisé en ce que** le dispositif de dépollution comporte un catalyseur d'oxydation primaire (5) et un catalyseur d'oxydation secondaire (6), et **en ce que** la platine (9) est disposée en aval du média du catalyseur d'oxydation primaire (5).

6. Moteur (1) selon la revendication 3 ou 4, **caractérisé en ce que** le dispositif de dépollution comporte un seul catalyseur d'oxydation, et **en ce que** la platine (9) est disposée en mont du média du catalyser.

7. Moteur (1) selon la revendication 5 ou 6, **caractérisé en ce que** la platine (9) est réalisée en une seule pièce avec une partie moulée du catalyseur.

## Claims

1. Internal combustion engine (1) comprising an exhaust gas pollution control device and a turbocharger, the device comprising a system for injecting a reducing agent with the aid of an injector (8) arranged on an exhaust line (3) provided with components (5, 6, 7), means for cooling the injector (8) comprising a fluid circulation circuit provided with a plate (9) receiving the injector and defining inlet (8a) and outlet (8b) orifices for the fluid, **characterized in that** the turbocharger comprises a cooling circuit provided with an inlet (4a) and outlet (4b) orifice for cooling fluid, and **in that** the fluid circulation circuit of the pollution control device is connected to the cooling circuit of the turbocharger (4) by means of a duct (10).

2. Engine (1) according to Claim 1, **characterized in that** the fluid circulation circuit is mounted in series with the cooling circuit of the turbocharger (4).

3. Engine (1) according to Claim 1 or 2, **characterized in that** the plate (9) is arranged on a component (5) of the exhaust line (2), the plate (9) defining a well (11) receiving the injector (8), a chamber (12) intended to receive the fluid and an inlet orifice (9a) and an outlet orifice (9b) for the fluid.

4. Engine (1) according to Claim 3, **characterized in that** the chamber (12) intended to receive the fluid at least partly surrounds the well (11) receiving the injector (8).

5. Engine (1) according to Claim 3 or 4, **characterized in that** the pollution control device comprises a primary oxidation catalyst (5) and a secondary oxidation catalyst (6), and **in that** the plate (9) is arranged downstream of the media of the primary oxidation catalyst (5).

6. Engine (1) according to Claim 3 or 4, **characterized in that** the pollution control device comprises a single oxidation catalyst, and **in that** the plate (9) is arranged upstream of the media of the catalyst.

7. Engine (1) according to Claim 5 or 6, **characterized in that** the plate (9) is produced in a single piece with a moulded part of the catalyst.

## Patentansprüche

1. Verbrennungsmotor (1) mit einer Abgasreinigungsvorrichtung und einem Turbolader, wobei die Vorrichtung ein System zum Einspritzen eines Reduktionsmittels mit Hilfe einer Einspritzdüse (8), die an einer mit Komponenten (5, 6, 7) versehenen Abgasleitung (3) angeordnet ist, Mittel zum Kühlen der Einspritzdüse (8), die einen Fluidkreiskauf enthalten, der mit einem die Einspritzdüse aufnehmenden Träger (9) versehen ist und Eintritts-(8a)- und Austritts-(8b)-Öffnungen für das Fluid definiert, **dadurch gekennzeichnet, dass** der Turbolader einen Kühlkreislauf aufweist, der mit einer Eintritts-(4a)- und einer Austritts-(4b)-Öffnung für das Kühlfluid versehen ist, und dass der Fluidkreislauf der Reinigungsvorrichtung mittels eines Rohrs (10) mit dem Kühlkreislauf des Turboladers (4) verbunden ist.

2. Motor (1) nach Anspruch 1, **dadurch gekennzeichnet, dass** der Fluidkreislauf mit dem Kühlkreislauf des Turboladers (4) in Reihe geschaltet ist.

3. Motor (1) nach Anspruch 1 oder 2, **dadurch gekennzeichnet, dass** der Träger (9) an einer Komponente (5) der Abgasleitung (2) angeordnet ist, wobei der Träger (9) eine Mulde (11), die die Einspritzdüse (8) aufnimmt, eine Kammer (12), die das Fluid aufnehmen soll, und eine Eintrittsöffnung (9a) und eine Austrittsöffnung (9b) für das Fluid definiert.

4. Motor (1) nach Anspruch 3, **dadurch gekennzeichnet, dass** die Kammer (12), die das Fluid aufnehmen soll, mindestens einen Teil der die Einspritzdüse (8) aufnehmenden Mulde (11) definiert.

5. Motor (1) nach Anspruch 3 oder 4, **dadurch gekennzeichnet, dass** die Reinigungsvorrichtung einen Primäroxidationskatalysator (5) und einen Sekundäroxidationskatalysator (6) umfasst und dass der Träger (9) stromabwärts der Medien des Primäroxidationskatalysators (5) angeordnet ist.

6. Motor (1) nach Anspruch 3 oder 4, **dadurch gekennzeichnet, dass** die Reinigungsvorrichtung einen einzigen Oxidationskatalysator umfasst und dass der Träger (9) stromaufwärts der Medien des Katalysators angeordnet ist.

7. Motor (1) nach Anspruch 5 oder 5, **dadurch gekennzeichnet, dass** der Träger (9) einstückig mit einem Formteil des Katalysators hergestellt ist.
